# EUROPEAN PATENT APPLICATION

(11) **EP 2 669 506 A1**
(43) Date of publication of application: **04.12.2013**
(21) Application number: 12170508.1
(22) Date of filing: 01.06.2012
(51) Int. Cl.: F03D 1/00

(54) **Handling of curved blades with displaced opposite root ends during stacking**

(71) Applicant: Siemens Aktiengesellschaft, 80333 München (DE)
(72) Inventor: Lieberknecht, Kim, 8200 Århus N (DK); Svinth, Kenneth Helligsoe, 7400 Herning (DK); Wieland, Maja Rose, 8220 Brabrand (DK)

(57) **Abstract**

The present invention relates to an arrangement (100) for holding blades, in particular curved blades, for a wind turbine. The arrangement (100) comprises a first holding device (150), a second holding device (160) and a third holding device (170). The first holding device (150) and the second holding device (160) are formed for holding the first blade (110) and the second blade (120) within a first holding plane (101). The third holding device (170) is formed for holding the third blade (130) within a second holding plane (102), wherein the second holding plane (102) is spaced from the first holding plane (101). A third centre frame (172) is coupleable to a supporting base by a first centre frame (152) of the first holding device (150) and a second centre frame (162) of the second holding device (160).

## Description

### Field of invention

The present invention relates to an arrangement for holding blades, in particular curved blades, for a wind turbine, and to a transporting system for transporting blades by the arrangement for holding blades. Moreover, the present invention relates to a method of holding blades, in particular curved blades, for a wind turbine.

### Art Background

In modern wind turbines, wind turbine blades are pre-bended or curved in order to increase the aerodynamic efficiency. Pre-bended or curved blades take up more space than straight blades so that curved blades makes it difficult to utilize the space when stacking the blades during transportation.

US 6,983,844 B2 discloses a method for transporting a set of large blades for a wind turbine. Two wind turbine blades are stacked opposed to each other, wherein a first root end of a first wind turbine blade and a second tip end of a second blade are fixed to a first end frame. A first tip end of the first blade and a second root end of the second blade are fixed to a second end frame. Hence, the first blade and the second blade are stacked opposed to each other to respective root end frames. Due to the length of the large blade, the stability during transportation by holding the respective blades at the respective tip ends and root ends is critical.

### Summary of the Invention

It is an object of the present invention to provide a holding arrangement for blades, which provides a high stability for the blades during transportation.

This object may be solved by an arrangement for holding blades, in particular curved blades, for a wind turbine, by a transporting system for transporting blades, in particular curved blades for a wind turbine and by a method of holding blades, in particular curved blades, for a wind turbine according to the independent claims.

According to a first aspect of the present invention, an arrangement for holding blades, in particular curved blades, for a wind turbine is presented. The arrangement comprises a first holding device, a second holding device and a third holding device.

The first holding device comprises a first end frame for holding a first root end of the first blade and a first center frame for holding a first center section of the first blade in such a way that the first center section is spaced from a first tip end of the first blade. The first holding device is formed for being coupled to a supporting base.

The second holding device comprises a second end frame for holding a second root end of a second blade and a second center frame for holding a second center section of the second blade in such a way that the second center section is spaced from a second tip end of the second blade. The second holding device is formed for being coupled to the supporting base.

The third holding device comprises a third end frame for holding a third root end of a third blade and a third center section for holding a third center section of the third blade in such a way that the third center section is spaced from a third tip end of the third blade. The third end frame is formed for being coupled to the supporting base.

The first holding device and the second holding device are formed for holding the first blade and the second blade within a first holding plane.

The third holding device is formed for holding the third blade within a second holding plane wherein the second holding plane is spaced from the first holding plane. The third center frame is coupled to the supporting base by the first center frame and the second center frame. In other words, the third centre frame is coupled to the first and to the second centre frame.

According to a further aspect of the present invention, a method of holding blades, in particular curved blades, for a wind turbine with the above described arrangement is presented.

A blade (i.e. one of the first to third blades) for a wind turbine comprises a length between a root end of the blade and a tip end of the blade. The blade comprises an aerody-namical profile which comprises a leading edge and a trailing edge. In operation of the blade, the air streams against the leading edge and streams away from the blade at the trailing edge. An imaginary straight line which connects the leading edge and the trailing edge is denoted as the chord line.

Furthermore, the blades may be pre-bended and may form a curved shape along its length extension. At the root end a blade comprises a generally circular cross-section which defines a cross-sectional plane. At a center point of the cross-section at the root end a connection line runs along a normal of the cross-sectional plane. A center point at the cross-section of the tip end lies onto the connection line which connects the center point of the root end and the center point of the tip end. The connection line is curved for a curved blade.

The center point at the tip end of a curved blade comprises an offset to an imaginary straight line running along the normal of the cross-sectional area at the root end and running through the center point of the root end. In other words, a the connection line between the center point of the root end cross-section and the center point of a tip end cross-section is curved.

An end frame as described above may comprise a plurality of beams for forming a rigid frame. To the end frame brackets may be attached for holding the respective root end of the respective blade. The respective root end may in particular be detachably coupled to the respective end frame.

The center frame comprises a plurality of beams for forming a rigid frame for holding the respective center section of the respective blade in such a way that the respective center section of the blade is spaced from the respective tip end of the respective blade and the respective root end of the respective blade. In particular, the center section is spaced from the root end frame and is located within an interval between approximately one third or to half approximately two third of the length (i.e. the connection line) of the total length of the first blade between the root end and the tip end of the first blade. The respective centre frame may comprise brackets for holding the centre section. The respective blade may be fixed to the respective end frame and/or the respective center frame by the bracket, by a strap and/or by a wire.

In particular, a curved blade may extend from the root end parallel to the normal of the cross-sectional plane at the root end in a straight way. After the center section is passed in direction to the tip end, the curving of the blade is initiated so that the connection center line does may not longer run straight and parallel to the normal of the cross-sectional plane of the root end and but runs along a curved line. Furthermore, the curved blade may also comprise a curvature from the root end to the tip end, for example. Hence, the connection line may run curved between the root end and the tip end of a respective blade. The center section may be defined between an area between the root end of the blade and the (centre) section, where the curving of the blade is initiated. Hence, if the center frame holds the first center section of the first blade where the center line of the blade is still parallel to the normal of the cross-sectional area of the root end, a proper attaching of the center frame to the center section is achieved.

Furthermore, if the center frame is attached to the blade at the center section (where e.g. the blade runs still straight along a straight line parallel to the normal of the cross-sectional plane at the root end) a proper stacking of further (e.g. third) center frames is achieved such that a better space saving stacking of a plurality of blades is achieved. In particular, the centre frame may be attached in line with the respective end frame.

Furthermore, the center of gravity of a blade is located closer to the root end than to the tip end of the blade. Hence, by attaching the center frame to the center section for holding the blade, a bending of the blade during transportation due to its own weight is reduced. Hence, a more stable and comfortable transportation of the blades is achieved.

A first holding plane describes a plane which is substantially parallel to an upper surface of the supporting base (e.g. the ground). A normal of the first holding plane may be perpendicular to a normal of a respective cross-sectional plane of a respective root end (e.g. of the first or second blade). The cross-section of a respective root end lies within the first holding plane. The cross-section of a respective root end (e.g. of the first and second blade) comprises a center point within the cross-sectional plane.

Furthermore, a second holding plane describes a plane which is substantially parallel to an upper surface of the supporting base (e.g. the ground). A normal of the second holding plane may be perpendicular to a normal of a respective cross-sectional plane of a respective root end (e.g. of a third or fourth blade). The cross-section of a respective root end (e.g. of the third or fourth blade) lies within the second holding plane. The further cross-section of a respective root end comprises a further center point within the further cross-sectional plane.

The stacking direction comprises a direction along which the blades (i.e. the first blade, the second blade, the third blade and e.g. the fourth blade) are stacked side by side along a generally parallel direction in comparison to an upper surface of the supporting base. In particular, the first blade and the second blade are arranged by the first holding device and the second holding device along the stacking direction in such a way that the (centre point of the) first root end and the (centre point of the) second root end are arranged in the same first holding plane and wherein the first root end and the second root end are arranged in a common cross-sectional plane. Hence, the first blade and the second blade are orientated in the same way and are arranged side by side along the stacking direction.

Furthermore, the third blade and the fourth blade are arranged by the third holding device and the fourth holding device along the stacking direction in such a way that the (centre point of the) third root end and the (centre point of the) fourth root end are arranged in the same second holding plane and wherein the third root end and the fourth root end are arranged in a common cross-sectional plane. Hence, the third blade and the fourth blade are orientated in the same way and are arranged side by side along the stacking direction.

Summarizing, by the above-described arrangement, the first blade and the second blade are orientated in a same direction and are arranged side by side along the first stacking direction. The third blade and the fourth blade are orientated oppositely to the first and the second blades, wherein the third blade and the fourth blade are arranged side by side along the first stacking direction.

The first center frame and the second center frame may be spaced apart from each other along the stacking direction. Above the first center frame and the second center frame, the third center frame is coupled to the first center frame and the second center frame. Hence, the third center frame covers the space between the first center frame and the second center frame.

According to a further exemplary embodiment, a respective center frame as described above comprises an open profile, in particular a U-shaped profile, with a respective open side such that the respective blade is insertable through the respective open side into the respective open profile such that the respective open profile partially surrounds the respective blade.

According to a further exemplary embodiment, the first center frame, the second center frame, the third center frame and/or the forth centre frame comprise a respective support beam. The support beam is detachably coupled to the respective open side of the respective open profile of the respective center frame, such that the respective center frame to which the support beam is attached forms a closed and thus more stable profile. Hence, a more robust and stable center frame is achieved.

According to a further exemplary embodiment, the first holding device and the second holding device are couplable to the supporting base such that a first direction of a first chord line of a first profile of the first center section of the first blade and/or a second direction of a second chord line of a second profile of the second center section of the second blade is alignable parallel along an upper surface of the supporting base, i.e. along a horizontal direction.

According to a further exemplary embodiment, the first holding device and the second holding device are couplable to the supporting base such that a first direction of a first chord line of a first profile of the first center section of the first blade and/or a second direction of a second chord line of a second profile of the second center section of the second blade is alignable perpendicular with respect to an upper surface of the supporting base, i.e. along a vertical direction.

According to a further exemplary embodiment, the third end frame is couplable to the supporting base and the third center frame is coupled to the first center frame and the second center frame such that a third direction of the third chord line of the third profile of the third center section of the third blade is alignable parallel or orthogonal (e.g. horizontal or vertical) along the upper surface of the supporting base.

In particular, the third chord line of the third profile of the third center section may be parallel aligned with respect to the first chord line of the first profile of the first center section and the second chord line of the second center section of the second blade.

According to a further aspect of the present invention, at least one of the first end frame and the second end frame is further formed such that the third tip end of the third blade is couplable. The third end frame may be further formed such that one of the first tip end of the first blade and the second tip end of the second blade is couplable.

According to a further exemplary embodiment, a fourth holding device comprising a fourth end frame for holding a fourth root end of a fourth blade and a fourth center frame for holding a fourth center section of the fourth blade is provided. A fourth center section is spaced from a fourth tip end of the fourth blade. The fourth end frame is formed for being coupled to the supporting base. The fourth holding device is formed for holding the fourth blade within the second holding plane, wherein the fourth center frame is coupled to the second center frame.

Along the stacking direction and in the first holding plane, a plurality of first and second holding devices may be arranged side by side in order to hold a plurality of first and second blades. Furthermore, along the stacking direction and in the second holding plane, a plurality of third and fourth holding devices may be arranged side by side.

According to a further exemplary embodiment, a transporting system for transporting blades, in particular curved blades, for a wind turbine, is presented. The transporting system comprises the arrangement as described above for holding blades and a transporting device comprising the supporting base. The arrangement is detachably coupled to the supporting base.

The transport device may be for example a truck, a cargo ship or a train.

Because the arrangement and in particular the end frames and the first and second center frame are detachably coupled to the supporting base, the arrangement may be used along the entire supply chain. In particular, between the transportation from the factory to the site of operation, the respective end frames and center frames may rest on the blade to be held. Between the transport devices, e.g. between a transportation by truck, by ship or by train, the blades have not to be detached from the respective frames because the frames may be carried over from one transportation device to the other transportation device together with the respective blades.

The above-described arrangement for holding blades is in particular a curved blade handling and stacking arrangement. The first holding device, the second holding device, the third holding device and the fourth holding device holds the respective curved blades in rows and columns. The first holding device and the second holding device hold the curved blades in a first orientation and the third holding device and the fourth holding device hold the blades in a second orientation, which is in opposite orientation compared to the first and second holding devices. Furthermore, third and fourth center frames are displaced with a chosen distance along the stacking direction in comparison to the first holding device and the second holding device.

In particular, the third holding device and the fourth holding device hold the third blade and the fourth blade above the first blade and the second blade which are held by the first holding device and the second holding device. In particular, due to the curvature of the blades, the first tip end of the first blade and the second tip end of the second blade are arranged below the respective third root end of the third blade and the fourth root end of the fourth blade, respectively.

In particular, the first end frame and the second end frame are fixed and coupled to each other along the stacking direction. The third end frame and the fourth end frame are fixed and coupled together along the stacking direction.

In particular, the first end frame, the second end frame, the third end frame and the fourth end frame each may comprise fast connection means, which may comprise e.g. bolt connections, wherein bolts of an adjacent end frame may be inserted and clicked in a hole of the other adjacent end frame and vice versa. Hence, a quick stacking of the respective end frames is achieved.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a schematical view of an arrangement comprising four holding devices which holds four blades in a stack according to an exemplary embodiment of the present invention;
Fig. 2 shows a first end frame which holds a first blade;
Fig. 3 shows a stack of first end frames according to an exemplary embodiment of the present invention;
Fig. 4 shows a third end frame which holds a third blade according to an exemplary embodiment of the present invention;
Fig. 5 shows a stack of third end frames according to an exemplary embodiment of the present invention;
Fig. 6 shows a side view of a stack of four blades which are arranged above each other;
Fig. 7 shows a top view of a stack of a plurality of blades according to an exemplary embodiment of the present invention;
Fig. 8 shows a perspective view of the stack of blades according to an exemplary embodiment of the present invention; and
Fig. 9 shows a stack of a plurality of blades comprising support beams according to an exemplary embodiment of the present invention.

### Detailed Description

The illustrations in the drawings are schematical. It is noted that in different figures, similar or identical elements are provided with the same reference signs.

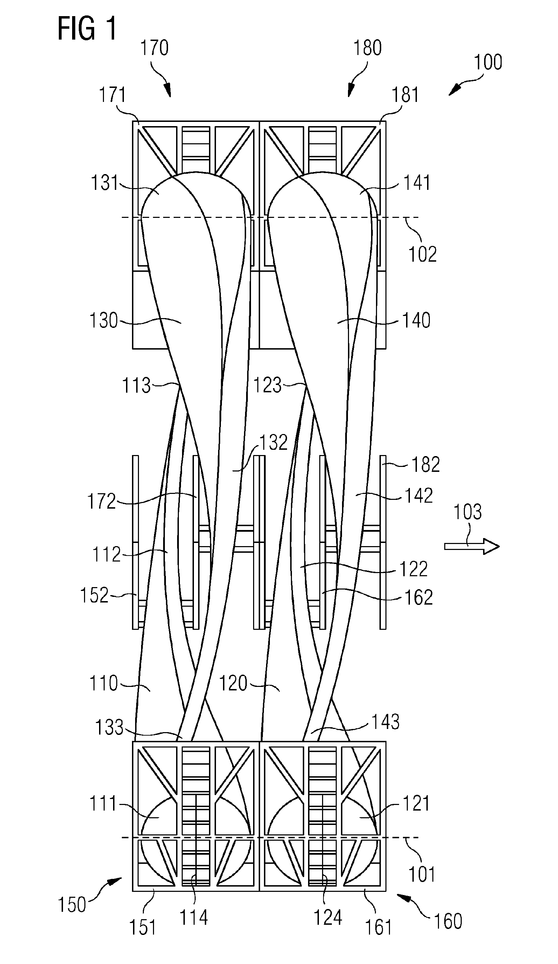

**Fig. 1** shows an arrangement 100 for holding blades, in particular curved blades, for a wind turbine. The arrangement 100 shown in Fig. 1 is adapted for holding four blades 110, 120, 130, 140. In particular, in Fig. 1, two rows and two columns of stacked blades 110, 120, 130, 140 are shown. According to the present invention, also a plurality of rows and columns of holding devices 150, 160, 170, 180 may be stacked in a plurality of rows and columns.

As shown in Fig. 1, the arrangement 100 comprises the first holding device 150, the second holding device 160, the third holding device 170 and the fourth holding device 180.

The first blade 110 comprises a first root end 111, a first center section 112 and a first tip end 113. The first center section 112 is spaced from the tip end 113 and the root end 111. As can be taken from Fig. 1, the first blade 110 is pre-bended and curved along its longitudinal direction. A first center section 112 defines for example a section at a half length (span width) of the first blade 110. The first holding device 150 holds the first blade 110 in such a way that a first chord line 114 is orientated along a first direction, in Fig. 1 shown with a generally vertical direction.

The second blade 120 comprises a second root end 121, a second center section 122 and a second tip end 123. The second center section 122 is spaced from the tip end 123 and the root end 121. As can be taken from Fig. 1, the second blade 120 is pre-bended and curved along its longitudinal direction. A second center section 122 defines for example a section at a half length (span width) of the second blade 120. The second holding device 150 holds the second blade 120 in such a way that a second chord line 124 is orientated along a second direction, in Fig. 1 shown with a generally vertical direction.

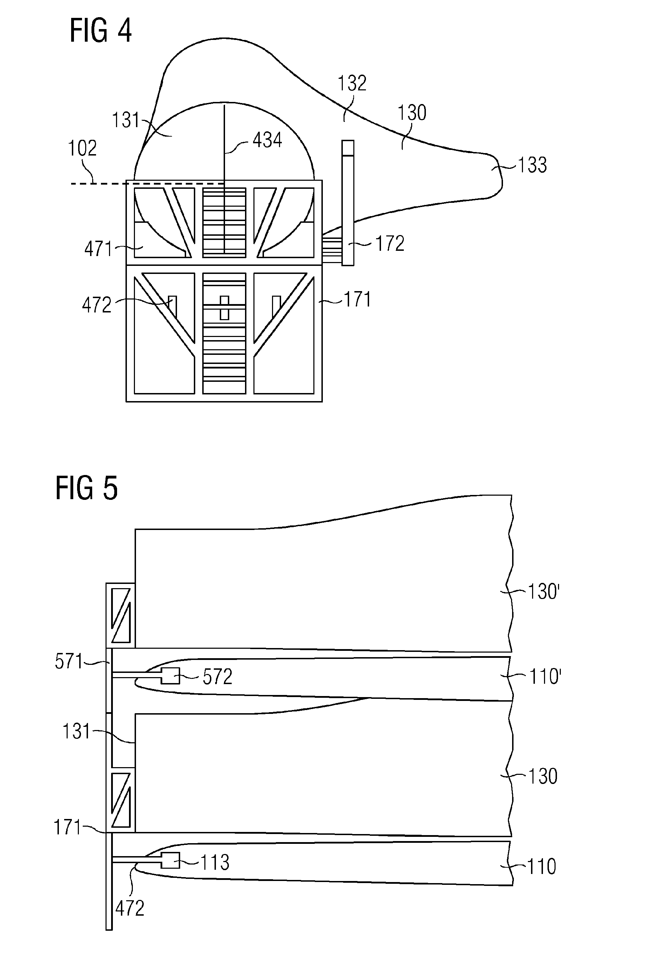

The third blade 130 comprises a third root end 131, a third center section 132 and a third tip end 133. The third center section 132 is spaced from the tip end 133 and the root end 131. As can be taken from Fig. 1, the third blade 130 is pre-bended and curved along its longitudinal direction. A third center section 132 defines for example a section at a half length (span width) of the third blade 130. The third holding device 150 holds the third blade 130 in such a way that a third chord line 434 (see Fig. 4) is orientated along a third direction, shown in Fig. 1 with a generally vertical direction.

The fourth blade 140 comprises a fourth root end 141, a fourth center section 142 and a fourth tip end 143. The fourth center section 142 is spaced from the tip end 143 and the root end 141. As can be taken from Fig. 1, the fourth blade 140 is pre-bended and curved along its longitudinal direction. A fourth center section 142 defines for example a section at a half length (span width) of the fourth blade 140. The fourth holding device 180 holds the fourth blade 140 in such a way that a fourth chord line is orientated along a fourth direction, in Fig. 1 shown with a generally vertical direction.

The arrangement 100 holds generally the respective blades 110, 120, 130, 140 in such a way that the respective chord lines 114, 124 of the first blade 110, the second blade 120, the third blade 130 and the fourth blade 140 are orientated parallel to each other. In other exemplary embodiments, the chord lines 114, 124, 434 of the respective blades 110, 120, 130, 140 are orientated along a horizontal direction, for example.

The respective center frames 152, 162, 172, 182 comprise an open profile, in particular a U-shaped profile, with a respective open side. The open sides of the respective open profiles form e.g. the top side of the respective U-shaped profile.

As can be taken from Fig. 1, the first holding device 150 and the second holding device 160 are arranged side by side along the stacking direction 103. The first holding device 150 and the second holding device 160 holds the respective first blade 110 and second blade 120 within the first holding plane 101. In particular, the center points of the cross-sections of the root ends of the respective blades 110, 120 are located within the first holding plane 101.

The third end frame 171 and the fourth end frame 181 holds the respective third blade 130 and fourth blade 140 in such a way that the third blade 130 and the fourth blade 140 are located above the first blade 110 and the second blade 120. In particular, the respective center points of the cross-sections of the third root end 131 and the fourth root end 141 are located in the second holding plane 102 which is vertically spaced to the first holding plane 101.

The third end frame 171 and the fourth end frame 181 are displaced along the stacking direction 103 with respect to the first end frame 151 and the second end frame 161. The first center frame 152 and the second center frame 162 are spaced between each other along the stacking direction 103. Above the first center frame 152 and the second center frame 162 the third center frame 172 is attached. The fourth center frame 182 is attached to the second center frame 162 and is spaced from the supporting base (e.g. the ground or the supporting base of a transport vehicle).

As can be taken from Fig. 1, the arrangement 100 and its respective holding devices 150, 160, 170, 180 holds the respective blades 110, 120, 130, 140 in such a way that the first blade 110 and the second blade 120 comprise the a first orientation on the one side and the third blade 130 and the fourth blade 140 comprise an opposite second orientation on the other side. In particular, the first holding device 150 and the second holding device 160 hold the first blade 110 and the second blade 120 in such a way that the run of the curvature of the respective blades 110, 120 is parallel. The third holding device 170 and the fourth holding device 180 hold the respective third blade 130 and fourth blade 140 in such a way that the curvature of the third blade 130 and the fourth blade 140 are parallel to each other and the curvature of the third blade 130 and the fourth blade 140 are oppositely orientated with respect to the curvature of the first blade 110 and the second blade 120.

Hence, by the arrangement 100 for holding the blades 110, 120, 130, 140 a dense and space-saving stack of blades is achieved.

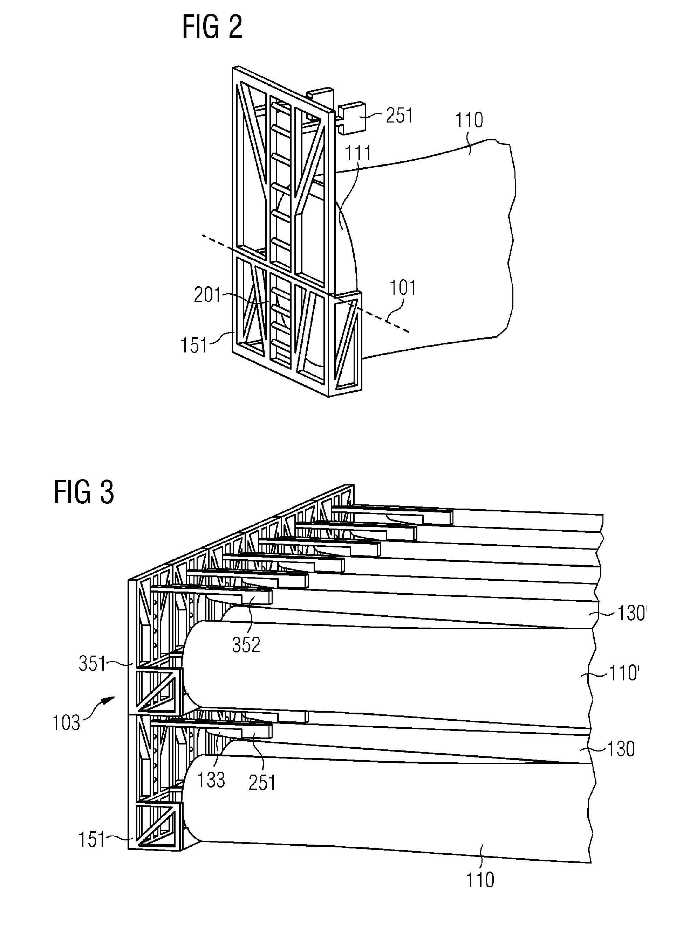

**Fig. 2** shows a more detailed view of a first end frame 151. The first end frame 151 holds the first blade 110. The first end frame 151 holds the first root end 111 of the first blade 110. The center point of the cross-sectional plane of the first root end 111 lies in the first holding plane 101. The first end frame 151 may comprise for example root end brackets 201 for fixing and holding the root end 111 of the first blade 110. Above the brackets 201 and above the first blade 110, the first end frame 151 may comprise a first tip end bracket 251 which is adapted for holding a third tip end 133 of the third blade 130, for example.

The second end frame 161 may be similarly constructed as the first end frame 151 as shown in Fig. 2.

**Fig. 3** shows an exemplary stack of blades according to the arrangement 100 of the present invention. The first end frame 151 holds the first blade 110. Furthermore, the first tip end bracket 251 of the first end frame 151 holds a third tip end 133 of the third blade 130. Above the first end frame 151, a further first end frame 351 may be attached. The further first end frame 351 holds a further first blade 110' which is arranged above the first blade 110 and the third blade 130.

The further first end frame 351 comprises a further first tip end bracket 352 for holding a further tip end of a further third blade 130'. Along the stacking direction 103, a plurality of further first and second end frames 151, 161, 351 may be arranged and coupled to each other. For sake of clarity, not all blades and first and second end frames which are arranged along the stacking direction 103 are indicated by respective reference numerals in Fig, 3.

**Fig. 4** shows a more detailed view of the third end frame 171 and the third center frame 172. The third end frame 171 comprises a further root end bracket 471 for holding the root end 131 of the third blade 130. The third end frame 171 holds the third root end 131 of the third blade 130 in such a way, that the center point of the cross-section of the root end 131 lies in the second holding plane 102. Furthermore, below the further root end bracket 471, the third end frame 171 comprises a third tip end bracket 472 for holding in particular a first tip end 113 of a first blade 110.

At the third center section 132 of the third blade 130, the third center frame 172 is arranged. In particular, as can be taken from Fig. 4, the third chord line 434 of the third blade 130 at the third root end 131 is orientated along a generally vertical direction.

**Fig. 5** shows an exemplary embodiment of the arrangement 100, wherein a plurality of third blades 130, 130' are stacked by respective third end frames 171, 571. The third end frame 171 holds by its third tip end bracket 472 a first tip end 113 of the first blade 110. Furthermore, the third end frame 171 holds the third root end 131 of the third blade 130 above the first blade 110. Above the third end frame 171, a further third end frame 571 is attached. The further third end frame 571 comprises a further third tip end bracket 572 for holding a tip end of a further first blade 110'. Furthermore, the further third end frame 571 holds the root end of a further third blade 130'.

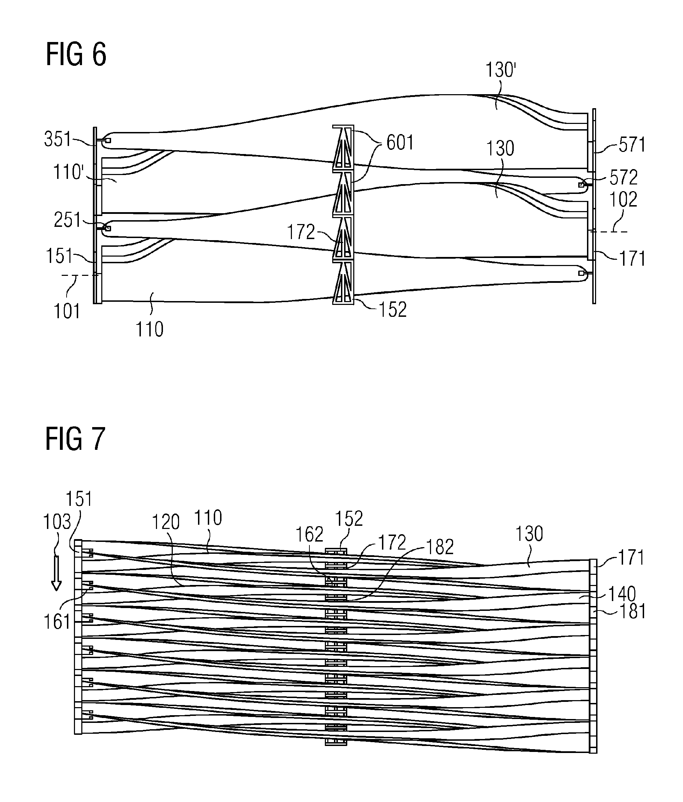

**Fig. 6** shows a side view of an arrangement 100, wherein four blades 110, 110', 130, 130' are stacked above each other by the respective end frames 151, 171, 351, 571 as shown in more detail in Fig. 2 to Fig. 5.

In particular, the first center frame 152 is located onto the supporting base. The third center frame 172 is coupled to the first center frame 152 and located above the first center frame 152. Above the third center frame 172 respective further center frames 601 are attached.

As can be taken from Fig. 6, the first end frame 151 holds the center point of the root end of the first blade 110 within the first holding plane 101 and the third end frame 171 holds a third center point of the third root end 131 of the third blade 130 within the second holding plane 102. Hence, the first holding plane 101 and the second holding plane 102 are spaced from each other along a vertical direction such that the first blade 110 and the third blade 130 are located above each other.

**Fig. 7** shows a top view of the arrangement 100 for holding and stacking blades. As can be taken from Fig. 7, a plurality of first, second, third and fourth blades 110, 120, 130, 140 are arranged along the stacking direction 103. The curvatures of the first and second blades 110, 120 are orientated oppositely with respect to the curvatures of the third and fourth blades 130, 140. Hence, because the third and fourth blades 130, 140 are arranged above the first and second blades 110, 120, the blades 110, 120, 130, 140 are arranged in a nested way.

In particular, the holding devices 150, 160, 170, 180 are adapted for holding the blades 110, 120, 130, 140 in such a way that in a projection plane (which has a normal along the vertical direction) of the blades onto the supporting base, a projection of the tip ends 113, 123, 133, 143 are covered by the projection of the respective root ends 111, 121, 131, 141 of the respective blades 110, 120, 130, 140. On the other side, the projections of the respective first and second center sections 112, 122 on the one side and the third and fourth centre section 132, 142, on the other side are displaced between each other.

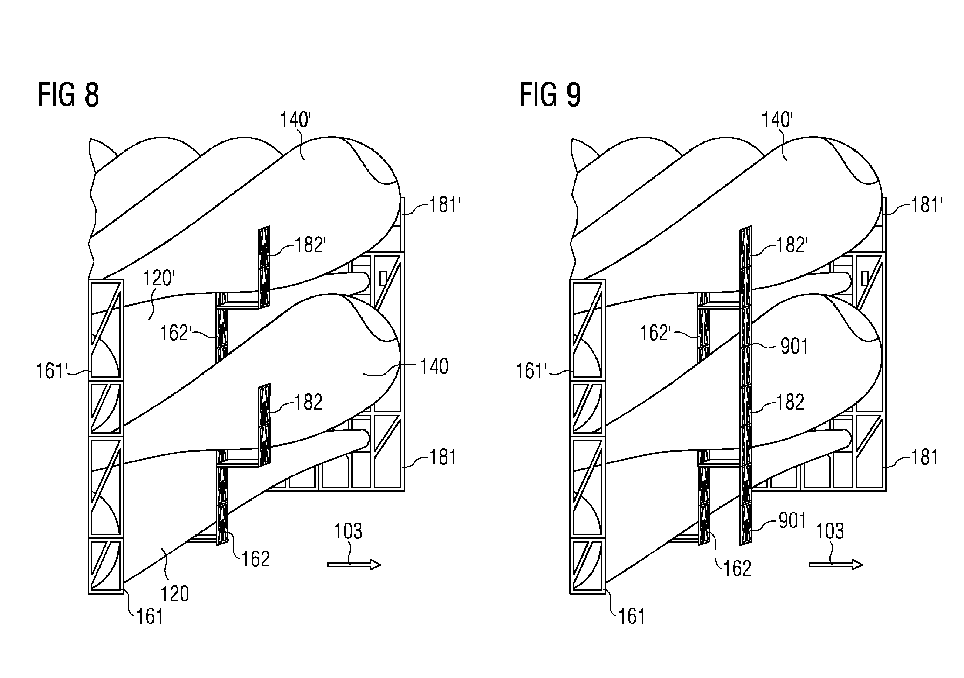

**Fig. 8** and **Fig. 9** show an exemplary embodiment of an end along the stacking direction 103 of the stack. Because the fourth center frame 182, 182' is displaced with respect to the second centre frame 162, 162' along the stacking direction 103, a supporting beam 901 may be attached to the fourth center frame 182, 182' in order to provide a more robust stacking arrangement 100. In particular, the supporting beam 901 may be attached between the supporting base and the fourth center section 182. Furthermore, a further supporting beam 901 may be connected between the fourth center frame 182 and a further fourth center frame 182' which is located above and spaced to the fourth center frame 182.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Arrangement (100) for holding blades, in particular curved blades, for a wind turbine, the arrangement (100) comprising
a first holding device (150) comprising a first end frame (151) for holding a first root end (111) of a first blade (110) and a first centre frame (152) for holding a first centre section (112) of the first blade (110) in such a way that wherein the first centre section (112) is spaced from a first tip end (113) of the first blade (110),
wherein the first holding device (150) is formed for being coupled to a supporting base,
a second holding device (160) comprising a second end frame (161) for holding a second root end (121) of a second blade (120) and a second centre frame (162) for holding a second centre section (122) of the second blade (120) in such a way that the second centre section (122) is spaced from a second tip end (123) of the second blade (120), and
wherein the second holding device (160) is formed for being coupled to the supporting base, and
a third holding device (170) comprising a third end frame (171) for holding a third root end (131) of a third blade (130) and a third centre frame (172) for holding a third centre section (132) of the third blade (130) in such a way that the third centre section (132) is spaced from a third tip end (133) of the third blade (130),
wherein the third end frame (171) is formed for being coupled to the supporting base,
wherein the first holding device (150) and the second holding device (160) are formed for holding the first blade (110) and the second blade (120) within a first holding plane (101), wherein the third holding device (170) is formed for holding the third blade (130) within a second holding plane (102), wherein the second holding plane (102) is spaced from the first holding plane (101),
wherein the third centre frame (172) is coupleable to the supporting base by the first centre frame (152) and the second centre frame (162).

2. Arrangement (100) according to claim 1,
wherein the first centre frame (152) comprises a first open profile, in particular a U-shape profile, with a first open side such that the first blade (110) is insertable through the first open side into the first open profile such that the first open profile partially surrounds the first blade (110), wherein the second centre frame (162) comprises a second open profile, in particular a U-shape profile, with a second open side such that the second blade (120) is insertable through the second open side into the second open profile such that the second open profile partially surrounds the second blade (120), and/or
wherein the third centre frame (172) comprises a third open profile, in particular a U-shape profile, with a third open side such that the third blade (130) is insertable through the third open side into the third open profile such that the third open profile partially surrounds the third blade (130).

3. Arrangement (100) according to claim 2,
wherein the first centre section (112), the second centre section (122) and/or the third centre section (132) comprise a respective supporting beam (901),
wherein the supporting beam (901) is detachably coupled to the respective open side of the respective open profile of the respective centre frame (152, 162, 172, 182) such that the respective centre frame (152, 162, 172, 182) to which the supporting beam (901) is attached forms a closed profile.

4. Arrangement (100) according to one of the claims 1 to 3, wherein the first holding device (150) and the second holding device (160) are coupleable to the supporting base such that
a first direction of a first chord line (114) of a first profile of the first centre section (112) of the first blade (110) is alignable parallel along an upper surface of the supporting base, and
a second direction of a second chord line (124) of a second profile of the second centre section (122) of the second blade (120) is alignable parallel along an upper surface of the supporting base.

5. Arrangement (100) according to one of the claims 1 to 3, wherein the first holding device (150) and the second holding device (160) are coupleable to the supporting base such that
a first direction of a first chord line (114) of a first profile of the first centre section (112) of the first blade (110) is alignable perpendicular with respect to an upper surface of the supporting base, and
a second direction of a second chord line (124) of a second profile of the second centre section (122) of the second blade (120) is alignable perpendicular with respect to an upper surface of the supporting base.

6. Arrangement (100) according to one of the claims 1 to 5, wherein the third end frame (171) is coupleable to the supporting base and the third centre frame (172) is coupled to the first centre frame (152) and the second centre frame (162) such that a third direction of a third chord line of a third profile of the third centre section (132) of the third blade (130) is alignable parallel or perpendicular with respect to an upper surface of the supporting base.

7. Arrangement (100) according to one of the claims 1 to 6,
wherein one of the first end frame (151) and the second end frame (161) is further formed such that the third tip end (133) of the third blade (130) is coupleable,
wherein the third end frame (171) is further formed such that one of the first tip end (113) of the first blade (110) and the second tip end (123) of the second blade (120) is coupleable.

8. Arrangement (100) according to one of the claims 1 to 7, further comprising
a fourth holding device (180) comprising a fourth end frame (181) for holding a fourth root end (141) of a fourth blade (140) and a fourth centre frame (182) for holding a fourth centre section (142) of the fourth blade (140) in such a way that the fourth centre section (142) is spaced from a fourth tip end (143) of the fourth blade (140),
wherein the fourth end frame (181) is formed for being coupled to the supporting base, and
wherein the fourth holding device (180) is formed for holding the fourth blade (140) within the second holding plane (102), wherein the fourth centre frame (182) is coupled to the second centre frame (162).

9. Transporting system for transporting blades, in particular curved blades, for a wind turbine, the transporting system comprises
an arrangement (100) for holding blades according to one of the claims 1 to 8,
a transporting system comprising the supporting base,
and
wherein the arrangement (100) is detachably coupled to the supporting base.

10. Method of holding blades, in particular curved blades, for a wind turbine, the method comprising
coupling a first holding device (150) comprising a first end frame (151) for holding a first root end (111) of a first blade (110) and a first centre frame (152) for holding a first centre section (112) of the first blade (110) to a supporting base in such a way that the first centre section (112) is spaced from a first tip end (113) of the first blade (110), and
coupling a second holding device (160) comprising a second end frame (161) for holding a second root end (121) of a second blade (120) and a second centre frame (162) for holding a second centre section (122) of the second blade (120) to the supporting base in such a way that the second centre section (122) is spaced from a second tip end (123) of the second blade (120),
wherein the first holding device (150) and the second holding device (160) are formed for holding the first blade (110) and the second blade (120) within a first holding plane (101),
coupling a third end frame (171) of a third holding device (170) to the supporting base,
wherein the third end frame (171) is formed for holding a third root end (131) of a third blade (130),
coupling a third centre frame (172) of the third holding device (170) to the first centre frame (152) and the second centre frame (162),
wherein the third centre frame (172) is formed for holding a third centre section (132) of the third blade (130) in such a way that the third centre section (132) is spaced from a third tip end (133) of the third blade (130),
wherein the third holding device (170) is formed for holding the third blade (130) within a second holding plane (102), and
wherein the second holding plane (102) spaced from the first holding plane (101).
